# FASCICULE DE BREVET EUROPEEN

(11) **EP 3 861 223 B1**
(45) Date de publication et mention de la délivrance du brevet: **14.12.2022**
(21) Numéro de dépôt: 19787039.7
(22) Date de dépôt: 12.09.2019
(51) Int. Cl.: F16D 3/205

(54) **PIÈCE D'ENTRAÎNEMENT DE JOINT TRIPODE À PROTUBÉRANCES CENTRALES INTERNES ANTI-BASCULEMENT**
ANTRIEBSTEIL EINES STATIVGELENKES MIT INNEREN ZENTRALEN KIPPSCHUTZVORSPRÜNGEN
DRIVE PORTION OF A TRIPOD JOINT WITH INNER CENTRAL ANTI-TILTING PROTRUSIONS

(30) Priorité: 04.10.2018 FR 1859220
(43) Date de publication de la demande: 11.08.2021
(73) Titulaire: PSA Automobiles SA, 78300 Poissy (FR)
(72) Inventeur: PUCHALA, Francois, 50700 TAMERVILLE (FR); FAUDAIS, Alain, 14370 AIRAN (FR); JAMAIN, Sebastien, 14840 DEMOUVILLE (FR)
(86) Numéro de dépôt international: PCT/FR2019/052122
(87) Numéro de publication internationale: WO 2020/070400

(56) Documents cités:
- US-A- 4 384 860
- US-A1- 2010 216 556
- US-A1- 2015 198 206

## Description

### Domaine technique de l'invention

L'invention concerne les joints tripodes, et plus précisément les pièces d'entraînement (ou bols entraîneurs) qui font partie de tels joints tripodes.

### Etat de la technique

Les joints tripodes (parfois appelés accouplements tripodes) sont des équipements mécaniques qui sont chargés d'assurer la transmission d'un mouvement de rotation entre deux axes concourants. Ils sont fréquemment, mais non limitativement, utilisés dans les transmissions des véhicules, généralement de type automobile, du fait qu'à chaque instant ils permettent que les vitesses de rotation des deux axes concourants qu'ils couplent soient égales. En outre, ils autorisent des écarts angulaires importants entre ces axes concourants (typiquement jusqu'à 25°), ce qui s'avère avantageux dans certaines situations, comme par exemple lorsque l'arbre d'une roue d'une voiture doit suivre les débattements de la suspension associée. Ainsi, ils sont très souvent utilisés dans les transmissions transversales en étant solidarisés fixement à l'arbre de sortie de la boîte de vitesses et à l'arbre d'une roue (lesquels constituent alors les deux axes concourants).

Un joint tripode comprend une pièce d'entraînement (ou bol entraîneur ou encore tulipe) à laquelle est couplé un élément interne placé à l'extrémité de l'un des deux axes concourants (et plus précisément celui qui est appelé ci-après « axe tripode »). Cet élément interne est muni de trois tourillons répartis à 120° les uns des autres dans un même plan, perpendiculaire à la direction axiale de l'axe tripode qu'il équipe, et comportant chacun une extrémité équipée d'un galet. La pièce d'entraînement (ou bol entraîneur ou encore tulipe) comprend une face interne qui délimite un logement ouvert comportant en périphérie trois zones d'accueil réparties à 120° les unes des autres et destinées chacune à loger en translation suivant la direction axiale l'un des galets. Ces trois zones d'accueil définissent trois rampes rectilignes espacées de 120° pour les trois galets qui assurent la jonction et la transmission de la puissance mécanique entre l'axe tripode et la pièce d'entraînement (ou tulipe). Par ailleurs, les trois galets peuvent être guidés sur les trois tourillons en liaisons pivots glissants par trois roulements à aiguilles, ou en liaison annulaire (comme décrit dans le document brevet FR 2800817). L'ensemble est en outre généralement lubrifié par de la graisse qui est retenue dans le joint tripode par un soufflet.

Un inconvénient de ce montage des galets dans les zones d'accueil réside dans le fait qu'en cas de rotation de la pièce d'entraînement (ou tulipe) l'un au moins des galets peut basculer dans sa zone d'accueil, ce qui peut freiner, voire empêcher, la translation de l'élément interne du joint tripode.

Il a certes été proposé dans le document brevet US 6,958,016, de réduire la profondeur de chaque zone d'accueil dans deux sous-parties latérales opposées d'une même face afin que le galet s'appuie sur ces deux sous-parties et ainsi ne bascule pas. Cependant, un tel agencement induit d'importants frottements qui ralentissent les translations de l'élément interne du joint tripode et donc augmentent le temps de réaction de ce dernier.

L'invention a donc notamment pour but d'améliorer la situation.

Les documents US 2015/198206 A1, US2010/216556 A1 et US 4 384 860 A décrivent

une pièce d'entraînement, d'une part, destinée à faire partie d'un joint tripode comportant un élément interne comprenant trois tourillons répartis à 120° les uns des autres dans un même plan, perpendiculaire à une direction axiale, et comportant chacun une extrémité équipée d'un galet, et, d'autre part, comprenant une face interne délimitant un logement ouvert comportant en périphérie de trois zones d'accueil réparties à 120° les unes des autres et destinées chacune à loger en translation suivant la direction axiale l'un des galets.

Cette pièce d'entraînement se caractérise par le fait que chaque partie de la face interne délimitant une zone d'accueil comprend une sous-partie centrale définissant une protubérance qui s'étend suivant la direction axiale et sur laquelle est destiné à s'appuyer le galet associé afin que ce dernier reste dans la zone d'accueil lors d'une rotation de la pièce d'entraînement.

Grâce à leurs trois appuis centraux sur les trois protubérances centrales associées, les galets ne risquent plus de basculer lors des rotations de la pièce d'entraînement, et dans le même temps les frottements des galets lors de leurs translations sont réduits puisqu'ils n'ont plus chacun qu'un seul appui central sur une protubérance centrale associée.

### Présentation de l'invention

Selon l'invention, chaque sous-partie centrale de la face interne de la pièce d'entraînement est un élément rapporté sur une paroi comportant ladite face interne.

La pièce d'entraînement selon l'invention peut comporter d'autres caractéristiques qui peuvent être prises séparément ou en combinaison, et notamment :
- chaque protubérance peut présenter une forme rayonnée ;
   ➢ la forme rayonnée peut, par exemple, avoir un rayon compris entre 1 mm et 100 mm ;
   ➢ chaque sous-partie centrale peut être un élément rapporté par vissage sur la face interne de la paroi.

L'invention propose également un joint tripode comportant, d'une part, un élément interne muni de trois tourillons répartis à 120° les uns des autres dans un même plan, perpendiculaire à une direction axiale, et comportant chacun une extrémité équipée d'un galet, et, d'autre part, une pièce d'entraînement du type de celle présentée ci-avant et logeant cet élément interne.

L'invention propose également une boîte de vitesses destinée à faire partie d'une transmission transversale et comprenant un joint tripode du type de celui présenté ci-avant.

L'invention propose également un véhicule, éventuellement de type automobile, et comprenant au moins un joint tripode du type de celui présenté ci-avant ou une boîte de vitesses du type de celle présentée ci-avant.

### Brève description des figures

D'autres caractéristiques et avantages de l'invention apparaîtront à l'examen de la description détaillée ci-après, et des dessins annexés, sur lesquels :
- la figure 1 illustre schématiquement, dans une vue en coupe dans un plan longitudinal, un exemple de réalisation d'une pièce d'entraînement équipée d'un seul galet, et
- la figure 2 illustre schématiquement la pièce d'entraînement de la figure 1 dans une vue en coupe selon l'axe II-II.

### Description détaillée de l'invention

L'invention a notamment pour but de proposer une pièce d'entraînement PE destinée à faire partie d'un joint tripode JT.

Dans ce qui suit, on considère, à titre d'exemple non limitatif, que le joint tripode JT est destiné à équiper une boîte de vitesses, et plus précisément à être solidarisé fixement à l'arbre de sortie d'une boîte de vitesses. Mais l'invention n'est pas limitée à cette application.

Par ailleurs, on considère dans ce qui suit, à titre d'exemple non limitatif, que la boîte de vitesses est destinée à faire partie d'une transmission transversale d'un véhicule à roues (éventuellement de type automobile). Dans ce cas, le joint tripode couple l'arbre de sortie de la boîte de vitesses à l'arbre d'une roue du véhicule. Mais l'invention n'est limitée ni à ce type de boîte de vitesses, ni à ce type de véhicule.

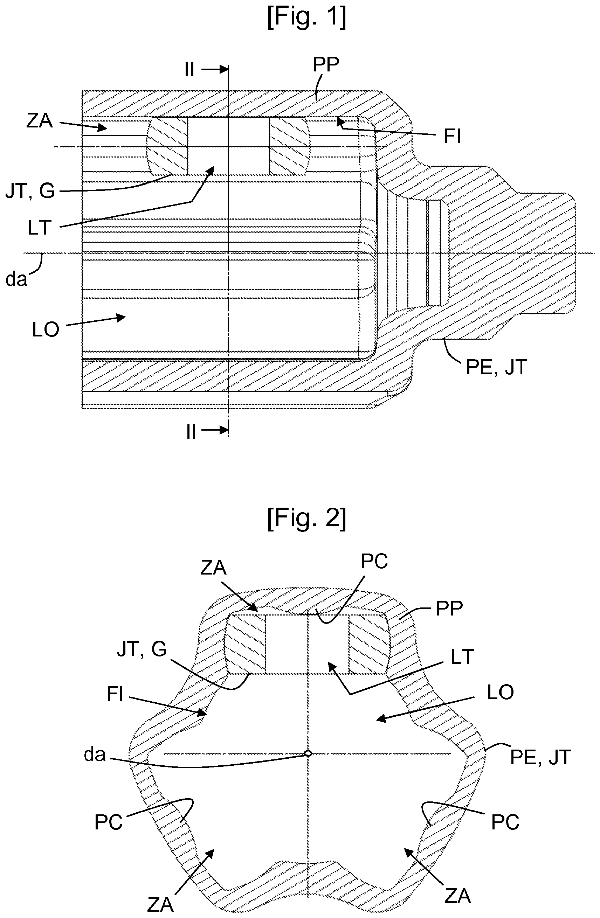

On a schématiquement représenté sur les figures 1 et 2 un exemple de réalisation d'une pièce d'entraînement PE selon l'invention, avant qu'elle n'équipe un joint tripode JT, et donc avant son couplage à un élément interne de ce dernier (JT).

Il est rappelé que l'élément interne comprend trois tourillons qui sont répartis à 120° les uns des autres dans un même plan, perpendiculaire à la direction axiale da d'un axe concourant qu'il équipe (appelé ci-après « axe tripode »), et qui comportent chacun une extrémité équipée d'un galet G. La position de l'un des trois galets G dans la pièce de d'entraînement PE est illustrée sur les figures 1 et 2.

Comme illustré sur les figures 1 et 2, la pièce d'entraînement (ou bol entraîneur ou encore tulipe) PE comprend une paroi PP qui comporte une face interne FI délimitant un logement ouvert LO. Ce logement ouvert LO comprend sur sa périphérie (située à proximité de la face interne FI de la paroi PP) trois zones d'accueil ZA qui sont réparties à 120° les ures des autres et destinées chacune à loger en translation suivant la direction axiale da l'un des trois galets G. Ces trois zones d'accueil ZA définissent trois rampes rectilignes pour les translations respectives des trois galets G qui assurent la jonction et la transmission de la puissance mécanique entre leur axe tripode et la pièce d'entraînement PE.

On notera que les trois galets G sont par exemple guidés en liaisons annulaires sur leurs trois tourillons respectifs par trois roulements à aiguilles. A cet effet, et comme illustré sur les figures 1 et 2, chaque galet G comprend un logement LT destiné à accueillir une partie terminale d'un tourillon avec son roulement à aiguilles.

Comme cela apparait sur la figure 2, chaque partie de la face interne FI délimitant une zone d'accueil ZA comprend une sous-partie centrale qui définit une protubérance PC s'étendant suivant la direction axiale da. Chaque protubérance PC est destinée à permettre au galet G associé de s'appuyer sur elle afin qu'il (G) reste dans la zone d'accueil ZA lors d'une rotation de la pièce d'entraînement PE.

Ces trois appuis centraux des galets G sur les trois protubérances centrales PC associées permettent à ces galets G de rester constamment parallèles aux rampes rectilignes de leurs trois zones d'accueil ZA suivant la direction axiale da, et donc empêchent leur basculement lors d'une rotation de la pièce d'entraînement PE. En outre, les frottements des galets G lors de leurs translations dans les trois rampes rectilignes de leurs trois zones d'accueil ZA respectives sont réduits puisque chacun d'entre eux (G) n'a plus qu'un seul appui central sur la protubérance centrale PC associée. Cet unique appui central au lieu de deux appuis latéraux, comme dans l'art antérieur décrit dans le document brevet US 6,958,016, permet donc de réduire le ralentissement des translations de l'élément interne du joint tripode JT, et donc permet une diminution du temps de réaction du joint tripode JT.

Chaque sous-partie centrale d'une zone d'accueil ZA, contenant une protubérance centrale PC, fait partie d'une face qui est sensiblement perpendiculaire à l'axe du tourillon associé.

Afin de minimiser les frottements de chaque galet G sur la protubérance centrale PC associée, chaque protubérance centrale PC peut, par exemple, présenter une forme semi-sphérique.

Par exemple, et comme illustré non limitativement sur la figure 2, chaque protubérance centrale PC peut présenter une forme rayonnée. Dans ce cas, la forme rayonnée peut, par exemple et non limitativement, avoir un rayon compris entre 1 mm et 100 mm. Ainsi, le rayon peut, par exemple, être égal à environ 30 mm.

Mais cette forme semi-sphérique n'est pas obligatoire car ce qui est important c'est que chaque galet G ait un appui central pour l'empêcher de pivoter et le maintenir dans l'axe de la rampe rectiligne de sa zone d'accueil ZA. Par conséquent, chaque protubérance centrale PC pourrait se présenter sous la forme d'une « ligne » centrale (suivant la direction axiale da) de très faible épaisseur (suivant la direction de l'axe du tourillon associé).

De façon connue, comme illustré sur la figure 2, chaque sous-partie centrale (définissant une protubérance centrale PC) peut faire partie intégrante de la paroi PP qui comporte la face interne FI.

Mais selon l'invention, chaque sous-partie centrale (définissant une protubérance centrale PC) est un élément rapporté (non représenté) sur la paroi PP qui comporte la face interne FI. Chaque sous-partie centrale peut, par exemple, être un élément qui est rapporté par vissage sur la face interne FI de la paroi PP. Au lieu d'une solidarisation par vissage, on pourrait prévoir une solidarisation par soudage ou collage.

## Revendications

1. Pièce d'entraînement (PE) pour un joint tripode (JT) comportant un élément interne comprenant trois tourillons répartis à 120° les uns des autres dans un même plan, perpendiculaire à une direction axiale, et comportant chacun une extrémité équipée d'un galet (G), ladite pièce d'entraînement (PE) comprenant une face interne (FI) délimitant un logement ouvert (LO) comportant en périphérie de trois zones d'accueil (ZA) réparties à 120° les unes des autres et destinées chacune à loger en translation suivant ladite direction axiale l'un desdits galets (G), chaque partie de ladite face interne (FI) délimitant une zone d'accueil (ZA) comprenant une sous-partie centrale définissant une protubérance (PC) s'étendant suivant ladite direction axiale et sur laquelle est destiné à s'appuyer ledit galet (G) associé afin que ce dernier (G) reste dans ladite zone d'accueil (ZA) lors d'une rotation de ladite pièce d'entraînement (PE), **caractérisée en ce que** chaque sous-partie centrale est un élément rapporté sur une paroi (PP) comportant ladite face interne (FI).

2. Pièce d'entraînement selon la revendication 1, **caractérisée en ce que** chaque protubérance (PC) présente une forme rayonnée.

3. Pièce d'entraînement selon la revendication 2, **caractérisée en ce que** ladite forme rayonnée a un rayon compris entre 1 mm et 100 mm.

4. Pièce d'entraînement selon l'une des revendications 1 à 3, **caractérisée en ce que** chaque sous-partie centrale est un élément rapporté par vissage sur ladite face interne (FI) de la paroi (PP).

5. Joint tripode (JT) comportant un élément interne muni de trois tourillons répartis à 120° les uns des autres dans un même plan, perpendiculaire à une direction axiale, et comportant chacun une extrémité équipée d'un galet (G), **caractérisé en ce qu'**il comprend en outre une pièce d'entraînement (PE) selon l'une des revendications précédentes, logeant ledit élément interne.

6. Boîte de vitesses pour une transmission transversale, **caractérisée en ce qu'**elle comprend un joint tripode (JT) selon la revendication 5.

7. Véhicule, **caractérisé en ce qu'**il comprend au moins un joint tripode (JT) selon la revendication 7 ou une boîte de vitesses selon la revendication 6.

8. Véhicule selon la revendication 7, **caractérisé en ce qu'**il est de type automobile.

## Patentansprüche

1. Antriebsteil (PE) für ein Dreipodendichtung (JT) mit einem inneren Element, das drei Zapfen umfasst, die um 120° zueinander in einer Ebene senkrecht zu einer axialen Richtung verteilt sind und jeweils ein Ende mit einer Rolle (G) aufweisen, wobei das Antriebsteil (PE) eine Innenfläche (FI) umfasst, die ein offenes Gehäuse (LO) begrenzt, das am Umfang drei Aufnahmebereiche (ZA) aufweist, die um 120° voneinander verteilt sind und jeweils dazu bestimmt sind, eine der Rollen (G) in der axialen Richtung translatorisch aufzunehmen, wobei jeder Teil der Innenfläche (FI) begrenzt eine Aufnahmezone (ZA), die einen zentralen Teilabschnitt umfasst, der einen Vorsprung (PC) definiert, der sich in der axialen Richtung erstreckt und auf dem die zugehörige Rolle (G) aufliegen soll, sodass diese Rolle (G) bei einer Drehung des Antriebsteils (PE) in der Aufnahmezone (ZA) verbleibt, **dadurch gekennzeichnet, dass** jeder zentrale Teilabschnitt ein Element ist, das an einer Wand (PP) angebracht ist, die die Innenfläche (FI) aufweist.

2. Antriebsteil nach Anspruch 1, **dadurch gekennzeichnet, dass** jeder Vorsprung (PC) eine strahlenförmige Form aufweist.

3. Antriebsteil nach Anspruch 2, **dadurch gekennzeichnet, dass** die strahlenförmige Gestalt einen Radius zwischen 1 mm und 100 mm aufweist.

4. Antriebsteil nach einem der Ansprüche 1 bis 3, **dadurch gekennzeichnet, dass** jeder zentrale Unterteil ein Element ist, das durch Verschraubung auf die innere Mittelfläche (FI) der Wand (PP) aufgebracht ist.

5. Dreipodendichtung (JT), dass ein inneres Element umfasst, das mit drei Zapfen versehen ist, die um 120° zueinander in einer gleichen Ebene senkrecht zu einer axialen Richtung verteilt sind, und jedes ein Ende aufweist, das mit einer Rolle (G) ausgestattet ist, **dadurch gekennzeichnet, dass** es außerdem ein Antriebsteil (PE) nach einem der vorhergehenden Ansprüche umfasst, dass das innere Element aufnimmt.

6. Getriebe für ein Quergetriebe, **dadurch gekennzeichnet, dass** es eine Dreipodendichtung (JT) nach Anspruch 5 umfasst.

7. Fahrzeug, **dadurch gekennzeichnet, dass** es mindestens ein Dreipodendichtung (JT) nach Anspruch 5 oder ein Getriebe nach Anspruch 6 umfasst.

8. Fahrzeug nach Anspruch 7, **dadurch gekennzeichnet, dass** es ein Kraftfahrzeug ist.

## Claims

1. Drive part (PE) for a tripod joint (JT) with an internal element consisting of three swirls distributed 120° from each other in the same plane, perpendicular to an axial direction, and each having an end equipped with a roller (G), the said drive part (PE) comprising an internal face (FI) delimiting an open housing (LO) having three reception areas (ZA) at the periphery (a) distributed at 120° each other and intended to accommodate in translation one of the said pebbles (G) following the said axial direction, each part of the said internal face (FI) delimiting a reception area (ZA) comprising a central subpart defining a protuberance (PC) extending in accordance with the said axial direction and on which the said associated pebble (G) is intended to be leaned so that it shall remain in the said reception area (ZA) during a rotation of the said drive part (PE), **characterized in that** each central subpart is a part reported on a wall (PP) comprising the said internal face (FI).

2. A training piece according to claim 1, **characterized by** each protuberance (PC) having a radiated form.

3. Part of the drive according to claim 2, **characterized in that** said radiated form has a radius of between 1 mm and 100 mm.

4. Part of a drive according to one of claims 1 to 3, **characterized in that** each central subpart is a component reported by screwing on the said internal central face (IF) of the wall (PP).

5. Tripod joint (JT) having an internal element with three swirls distributed at 120° from each other in the same plane, perpendicular to an axial direction, and each having an end equipped with a roller (G), **characterized in that** it also includes a drive part (PE) according to one of the preceding claims, housing the said internal element.

6. Gearbox for a transverse transmission, **characterized by** a tripod joint (JT) according to claim 5.

7. A vehicle, **characterized in that** it includes at least one tripod joint (JT) according to claim 5 or a gearbox according to claim 6.

8. A vehicle as defined in claim 7, characterized as being of an automobile type.
